# EUROPEAN PATENT SPECIFICATION

(11) **EP 3 446 434 B1**
(45) Date of publication and mention of the grant of the patent: **21.07.2021**
(21) Application number: 16899628.8
(22) Date of filing: 20.04.2016
(51) Int. Cl.: H04L 9/12, H04L 9/32, H04L 29/08, H04L 29/06, H04W 4/70, H04W 4/80

(54) **ACCESS CREDENTIAL MANAGEMENT DEVICE**
VORRICHTUNG ZUR VERWALTUNG VON ZUGANGSDATEN
DISPOSITIF DE GESTION DE JUSTIFICATIF D'IDENTITÉ D'ACCÈS

(43) Date of publication of application: 27.02.2019
(73) Proprietor: Visa International Service Association, San Francisco, CA 94128-8999 (US)
(72) Inventor: GADDAM, Ajit, Sunnyvale, California 94085 (US); PRAKASH, Gyan, Foster City, California 94404 (US)
(74) Representative: EIP
(86) International application number: PCT/US2016/028402
(87) International publication number: WO 2017/184131

(56) References cited:
- US-A1- 2006 225 132
- US-A1- 2006 225 132
- US-A1- 2010 199 086
- US-A1- 2013 223 279
- US-A1- 2014 244 834
- US-A1- 2014 244 834
- US-A1- 2014 359 131

## Description

### BACKGROUND

Households typically include a number of connected devices and these connected devices have needs to access resources such as goods, services, and data. For example, consumers have refrigerators for storing food, gas meters for measuring gas usage, electric meters for measuring power usage, and water meters for measuring water usage. Recently, "smart" versions of some of these connected devices have been introduced to the public. It has been contemplated that such smart connected devices could be capable of automatically requesting resources such as software updates, goods or services. However, each time a connected device initiates a transaction (usually over a wireless area network) there is a chance that details of the transaction (including payment account information) and/or sensitive credential information associated with the connected device may be intercepted and the owner of the device may be defrauded. Given the proliferation of network enabled connected devices, it is difficult to provide data security to each and every interaction between each and every connected device within system.

US 2014/0244834 A1 discloses methods to discover, configure and leverage relationships in internet of things (loT) networks. US 2006/0225132 A1 discloses a system and method of proxy authentication in a secured network.

Embodiments of the invention address these and other problems, individually and collectively.

### BRIEF SUMMARY

According to a first aspect of the invention there is provided a method, as defined by appended claim 1. According to a second aspect of the invention there is provided an apparatus, as defined by appended claim 7. According to a third aspect of the invention there is provided a method, as defined by appended claim 14.

Embodiments of the invention can be applied to the "Internet of things" where machines can interact with other machines without human intervention. In particular, embodiments of the invention are directed to a platform for a proxy device configured to store and manage access credentials on behalf of one or more connected devices. Upon receiving a request from the connected device, the proxy device may initiate a transaction on behalf of the connected device using the stored access credentials.

One embodiment of the invention is directed to a method comprising detecting a plurality of electronic devices within a vicinity of a proxy device and establishing a trusted relationship with each of the detected electronic devices. In response to establishing the trusted relationships, the method comprises associating each of the electronic devices with an access credential. The method then comprises receiving, from an electronic device of the electronic devices, a request to conduct a transaction and initiating the transaction on behalf of the electronic device using the access credential.

Another embodiment of the invention is directed to an apparatus comprising a processor, one or more short range communication means, and a memory including instructions that, when executed with the processor, cause the apparatus to, detect a plurality of electronic devices within a vicinity of the apparatus (e.g., within range of the short range communication means) and establish a trusted relationship with the a plurality of detected electronic devices. In response to establishing the trusted relationship, the instructions further cause the apparatus to create an association between each of the a plurality of electronic devices and an access credential. The apparatus is configured to receive, from an electronic device of the a plurality of electronic devices, a request to conduct a transaction, and initiate the transaction on behalf of the electronic device using the access credential.

Another embodiment of the invention is directed to a method comprising receiving, at a connected device and in response to establishing a trusted relationship with a proxy device, an encryption key and a set of protocols from the proxy device. The method comprises detecting that one or more conditions set forth in the set of protocols has been met and identifying a transaction associated with the one or more conditions. Upon making this detection, the method comprises generating a transaction request based on the identified transaction, encrypting the transaction request using the received encryption key, and transmitting the transaction request to the proxy device.

These and other embodiments of the invention are described in further detail below.

### BRIEF DESCRIPTION OF THE DRAWINGS

**FIG. 1** depicts an example system architecture capable of implementing at least some embodiments of the current disclosure;
**FIG. 2** depicts an example proxy device configured to store and manage access credentials and conduct transactions on behalf of connected devices in accordance with at least some embodiments;
**FIG. 3** depicts an example data flow that may be implemented in accordance with at least some embodiments;
**FIG. 4** depicts a data flow diagram illustrating a process for conducting a transaction using the described platform in accordance with at least some embodiments; and
**FIG. 5** depicts a flow diagram illustrating a process for enrolling one or more connected devices and subsequently conducting transactions in accordance with at least some embodiments.

### DETAILED DESCRIPTION

In the following description, various embodiments will be described. For purposes of explanation, specific configurations and details are set forth in order to provide a thorough understanding of the embodiments. However, it will also be apparent to one skilled in the art that the embodiments may be practiced without the specific details. Furthermore, well-known features may be omitted or simplified in order not to obscure the embodiment being described.

Prior to discussing the details of some embodiments of the present invention, description of some terms may be helpful in understanding the various embodiments.

An "access credential" may be any data or portion of data used to gain access to a particular resource. In some embodiments, an access credential may be a login and/or password for a user account. In some embodiments, an access credential may be include account information or a token associated with the account information, a cryptogram, a digital certificate, etc. A proxy device may store one or more access credentials associated with each connected device. In some embodiments, an access credential stored in association with a connected device may be used to conduct transactions on behalf of the connected device. In some embodiments, the proxy device may store a single access credential that may be used in each transaction initiated by the proxy device.

"Account data" may refer to any content of an account of a user conducting a transaction. In some embodiments, account data may be payment account data that may be utilized to make a purchase. In other embodiments, account data may be any content associated with a user's non-financial account. For example, account data may include electronic files, photos, videos, and documents stored by the user's account. In some embodiments, account data may be stored by an authorization computer.

"Account information" may refer to any information surrounding an account of a user. For example, account information may include account data and one or more account identifiers. In some embodiments, the account identifier may be a PAN or primary account number. The PAN may be 14, 16, or 18 digits. Account information may also include an expiration date associated with the account, as well as a service code and/or verification values (e.g., CW, CW2, dCW, and dCW2 values).

An "authorization request message" may be an electronic message that requests authorization for a transaction. In some embodiments, it is sent to a transaction processing computer and/or an issuer of a payment card to request authorization for a transaction. An authorization request message according to some embodiments may comply with ISO 8583, which is a standard for systems that exchange electronic transaction information associated with a payment made by a user using a payment device or payment account. The authorization request message may include an issuer account identifier that may be associated with a payment device or payment account. An authorization request message may also comprise additional data elements corresponding to "identification information" including, by way of example only: a service code, a CVV (card verification value), a dCW (dynamic card verification value), a PAN (primary account number or "account number"), a payment token, a user name, an expiration date, etc. An authorization request message may also comprise "transaction information," such as any information associated with a current transaction, such as the transaction amount, merchant identifier, merchant location, acquirer bank identification number (BIN), card acceptor ID, information identifying items being purchased, etc., as well as any other information that may be utilized in determining whether to identify and/or authorize a transaction.

An "authorization response message" may be a message that responds to an authorization request. In some cases, it may be an electronic message reply to an authorization request message generated by an issuing financial institution or a transaction processing computer. The authorization response message may include, by way of example only, one or more of the following status indicators: Approval -- transaction was approved; Decline -- transaction was not approved; or Call Center -- response pending more information, merchant must call the toll-free authorization phone number. The authorization response message may also include an authorization code, which may be a code that a credit card issuing bank returns in response to an authorization request message in an electronic message (either directly or through the transaction processing computer) to the merchant's access device (e.g. POS equipment) that indicates approval of the transaction. The code may serve as proof of authorization. As noted above, in some embodiments, a transaction processing computer may generate or forward the authorization response message to the merchant.

A "connected device" may be any suitable electronic device capable of communicating with, and/or interacting with other devices. A connected device may have a primary function that is unrelated to communicating with other electronic devices. For example, a connected device may be a refrigerator that, in addition to preserving food, is capable of interacting with one or more other electronic devices. In some embodiments, a connected device may be associated with a device identifier. The device identifier may be used by a service provider to determine the type of device for a particular connected device. Examples of connected devices may include gas and electric meters, refrigerators, lamps, thermostats, printers, automobiles, fire alarms, home medical devices, home alarms, motorcycles, boats, televisions, etc.

A "device identifier" may include any suitable distinctive set of characters used to identify a device. An exemplary device identifier may include any suitable number or type of characters (e.g., numbers, graphics, symbols, or other information) that may uniquely represent a device. By way of example, a device identifier may be a serial number, partial serial number, or device name or nickname. In some embodiments, a device identifier may be generated, based on a trusted hardware root. Additionally, the device identifier may be a temporary identifier for a particular device, such as a network address at which the device may be found.

An "electronic device," may be any device that accomplishes its purpose electronically. An electronic device may have multiple functions. For example an electronic device may have a primary function and one or more secondary functions. A primary function may be the function that most closely aligns with the electronic device's purpose. An example of an electronic device may be a connected device.

An "issuer" may typically refer to a business entity (e.g., a bank) that maintains an account for a user that is associated with a portable communication device such as an account enrolled in a mobile application installed on a portable communication device. An issuer may also issue account parameters associated with the account to a portable communication device. An issuer may be associated with a host system that performs some or all of the functions of the issuer on behalf of the issuer.

A "merchant" may typically be an entity that engages in transactions and can sell goods or services, or provide access to goods or services.

A "protocol set" may be a set of rules or configuration settings that indicates one or more actions are allowed and/or should be performed. In some cases, conditions upon which those actions are to be performed. In some embodiments, a protocol set may include conditional statements, such as "if *x_condition* occurs, then perform *y_action."* In some embodiments, a protocol set may include a list of transactions that are allowed for a particular connected device and/or access credential. For example, a proxy device may identify, based on a device identifier, a type of device that the protocol set is related to. The proxy device may then create a custom protocol set for that connected device based on the device's type. For example, upon determining that a connected device is a water meter, the proxy device may create a protocol set for the water meter that only allows it to conduct transactions related to water usage. In this example, the protocol set may be stored at the proxy device in relation to the water meter (or an access credential associated with the water meter) and at least a portion of the protocol set may be provisioned onto the water meter. In some embodiments, protocols may be stored on a processing server. Upon enrollment of a connected device with the proxy device, the processing server may identify the protocol set relevant to the connected device and transmit that protocol set to the proxy device.

A "processing server" may be any computing device configured to provide remote support for a proxy device. The processing server may provide any suitable service and/or processing for the proxy device. In some embodiments, the processing server may maintain an account for one or more users. The processing server may also store one or more protocols and/or user preferences related to the operation of the proxy device or service.

A "proxy device" may be a device that can act for another device. In some embodiments, a proxy device can include any suitable computing device configured to establish communication sessions with one or more connected devices and a transaction server (either directly or via a processing server) and to initiate transactions with the transaction server on behalf of the connected devices. In some embodiments, the proxy device may store one or more access credentials to be used in these transactions. In some embodiments, the proxy device may be configured to store one or more protocol sets related to transactions. The proxy device may be further configured to confirm that transactions are in compliance with these transaction protocols prior to initiating the transactions.

The term "provisioning" may include any preparation and/or configuring of a device to enable it to perform a function. For example, provisioning may include storing rules, protocols, and/or instructions on a device to direct the device's actions. In some embodiments, a device may be provisioned with access credentials associated with a user of the device. The access credentials may enable the device to execute transactions on the user's behalf without active input from the user.

A "server computer" may include a powerful computer or cluster of computers. For example, the server computer can be a large mainframe, a minicomputer cluster, or a group of servers functioning as a unit. In one example, the server computer may be a database server coupled to a Web server. The server computer may be coupled to a database and may include any hardware, software, other logic, or combination of the preceding for servicing the requests from one or more client computers. The server computer may comprise one or more computational apparatuses and may use any of a variety of computing structures, arrangements, and compilations for servicing the requests from one or more client computers.

A "token" may include an identifier for a payment account that is a substitute for an account identifier, such as a primary account number (PAN). For example, a token may include a series of numeric and/or alphanumeric characters that may be used as a substitute for an original account identifier. For example, a token "4900 0000 0000 0001" may be used in place of a PAN "4147 0900 0000 1234." In some embodiments, a token may be "format preserving" and may have a numeric format that conforms to the account identifiers used in existing payment processing networks (e.g., ISO 8583 financial transaction message format). In some embodiments, a token may be used in place of a PAN to initiate, authorize, settle or resolve a payment transaction or represent the original credential in other systems where the original credential would typically be provided. In some embodiments, a token value may be generated such that the recovery of the original PAN or other account identifier from the token value may not be computationally derived. Further, in some embodiments, the token format may be configured to allow the entity receiving the token to identify it as a token and recognize the entity that issued the token. A token may be associated with a protocol set.

A "transaction server" may include any computing device capable of receiving a request for a transaction and processing information related to the requested transaction. In some embodiments, the transaction server may be affiliated with an electronic marketplace or a retail entity that maintains an internet presence. A transaction server may support transactions to acquire resources (e.g., goods and/or services). In some embodiments, a user may request a transaction by visiting a website affiliated with the transaction server and selecting one or more items to purchase. The transaction server may be in communication with other devices via a network connection.

A "user device" may be a device that is operated by a user. Examples of user devices may include a mobile phone, a smart phone, a personal digital assistant (PDA), a laptop computer, a desktop computer, a server computer, a vehicle such as an automobile, a thin-client device, a tablet PC, etc. Additionally, user devices may be any type of wearable technology device, such as a watch, earpiece, glasses, etc. The user device may include one or more processors capable of processing user input. The user device may also include one or more input sensors for receiving user input. As is known in the art, there are a variety of input sensors capable of detecting user input, such as accelerometers, cameras, microphones, etc. The user input obtained by the input sensors may be from a variety of data input types, including, but not limited to, audio data, visual data, or biometric data. The user device may comprise any electronic device that may be operated by a user, which may also provide remote communication capabilities to a network. Examples of remote communication capabilities include using a mobile phone (wireless) network, wireless data network (e.g., 3G, 4G or similar networks), Wi-Fi, Wi-Max, or any other communication medium that may provide access to a network such as the Internet or a private network.

The term "verification" and its derivatives may refer to a process that utilizes information to determine whether an underlying subject is valid under a given set of circumstances. Verification may include any comparison of information to ensure some data or information is correct, valid, accurate, legitimate, and/or in good standing.

Details of some embodiments of the present invention will now be described.

Embodiments of the invention are directed to a proxy device configured to store and manage access credentials on behalf of one or more connected devices. In some embodiments, the proxy device may establish a trusted relationship with one or more connected devices upon enrollment of the connected devices with the proxy device. Once this trusted relationship has been established, the proxy device, upon receiving a request from the connected device, may initiate a transaction on behalf of the connected device. In some embodiments, the proxy device may ensure that the request is in compliance with a set of protocols before the transaction is initiated. In some embodiments, the request may include an indication to replenish a resource utilized by the connected device, pay for a resource consumed by the connected device, order a resource managed by the connected device, or any other suitable resource-related request. The transaction may include one or more actions intended to fulfill the received request. To initiate the transaction, the proxy device may identify an appropriate access credential and provide it to a determined transaction server.

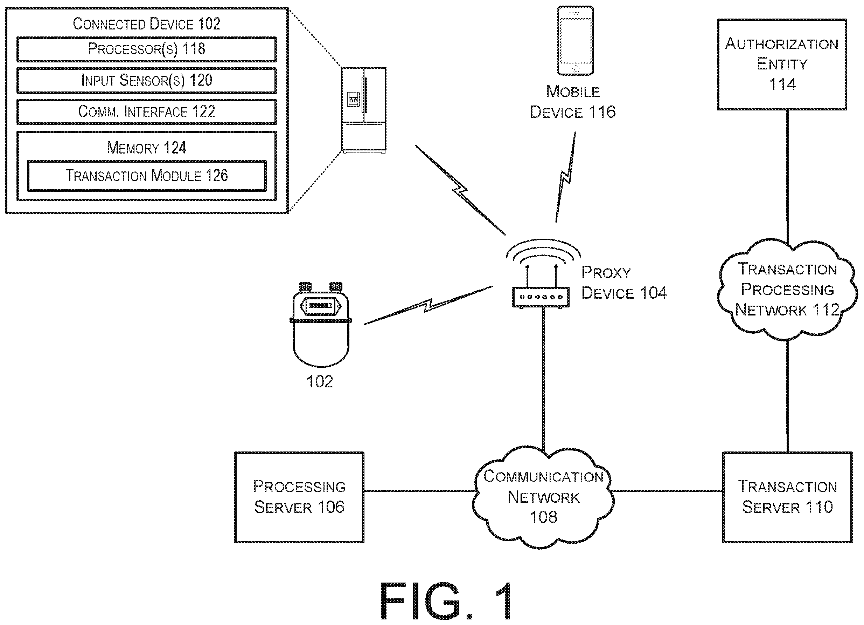

**FIG. 1** depicts an example system architecture capable of implementing at least some embodiments of the current disclosure. In FIG. 1, one or more connected devices 102 may be in communication with a proxy device 104. The connected devices 102 may be located within a vicinity of the proxy device 104. For example, the connected devices 102 may be within range of a short range communication means used by the proxy device 104. In some embodiments, the range may be less than about 100, 50, 20, 10, or 5 yards. In some embodiments, a trusted communication session may be established between the connected devices 102 and the proxy device 104.

In some embodiments, the proxy device 104 may be in communication with a processing server 106 via a communication network 108. The processing server 106 and/or the proxy device 104 may also be in communication with a transaction server 110 configured to receive and process transaction requests. Upon receiving a transaction request, the transaction server 110 may generate and submit an authorization request to a transaction processing network 112 to be authorized by an authorization entity 114. In some embodiments, a mobile device 116 may be used to communicate with the proxy device 104 and/or one or more of the connected devices 102.

The connected device 102 may be any electronic device configured to perform at least one primary function. The connected device 102 may include one or more processors 118 capable of processing user input. The connected device 102 may also include one or more input sensors 120 for collecting input. In some embodiments, the input may include user provided input. Some non-limiting examples of input sensors 120 that may be included in a connected device include keyboards, mice, microphones, cameras, motion sensors, accelerometers, cameras, pressure sensors, thermometers, a global positioning system (GPS), etc. In some embodiments, the input may include input related to resource usage. For example, the connected device may be a water meter configured to capture input related to water usage at a particular location. In another example, the connected device may be an electricity meter configured to capture input related to electricity usage at a particular location.

In some embodiments, the connected device 102 may include a communication interface 122 configured to enable communication between the connected device 102 and another electronic device (e.g., proxy device 104 and/or mobile device 116). Examples of communication interface 122 may include one or more radio frequency (RF) transceivers configured to send and receive communications using near-field communications (NFC), or other radio frequency or wireless communication protocols such as Bluetooth, Bluetooth low-energy (BLE), a wireless local area network (e.g., WiFi), iBeacon, etc. In some embodiments, communication interface 122 may include an infrared communication device. In some embodiments, the communication interface 122 may include both long range and short range communication means. For example, the communication interface may include an antenna configured to connect to a cellular network in order to enable communication with various other components of the depicted architecture. Additionally, the communication interfaces may include short range communication means for establishing a short range communication session with a mobile device 108.

In some embodiments, the communication technology used by the connected device 102 and/or the proxy device 104 may depend on the type of power source used by the connected device. For example, if the device has access to a regular, external power supply (e.g., as is common for smart refrigerators and other devices such as washer/driers, garage doors, cars, etc.) it may include a WiFi interface. Alternatively, if the device relies on a battery instead of an external power supply, it may include a means for communication that consumes less power, such as low power Bluetooth interface, a ZigBee interface, a near field communication (NFC) or radio frequency (RF) interface, or any other suitable wireless access interface.

Embodiments of one or more modules on the connected device 102 may be stored and executed from its memory 124. Turning to the contents of the memory 124 in more detail, the memory 126 may include an operating system and one or more modules configured to cause the processors 118 to carry out instructions in accordance with at least some embodiments of the disclosure. For example, the memory 124 may include a transaction module 126 configured to work with the processor 118 to initiate one or more transactions related to the primary function of the connected device 102.

In some embodiments, the transaction module 126 may be programmed to cause the connected device 102 to initiate a transaction on behalf of an owner and/or operator of the connected device 102. For example, the transaction module 126 may be configured to initiate a purchase of a resource on behalf of the user. The resource may be any good or service related to a primary function of the electronic device. For example, a water purifier may initiate a purchase order for new water filters upon determining that the current water filters need replacement. The transaction module 126 may be programmed to cause the connected device 102 to provide one or more transaction details to the proxy device 104. In some embodiments, the transaction module may be programmed to cause the connected device 102 to initiate a transaction upon determining that one or more threshold conditions have been met. Threshold conditions may be preset (e.g., programmed by the manufacturer or distributor of the connected device) or provided by a user of the connected device 102.

In at least some embodiments of the invention, a proxy device 104 may be configured to detect local connected devices 102. For example, the proxy device 104 may be configured to perform a device discovery action that identifies all communicatively enabled electronic devices within range of the proxy device 104. By way of illustration, a proxy device 104 may detect all electronic devices that are connected to WiFi within range of the proxy device 104. Once detected, the proxy device 104 may receive a selection of at least one of the connected devices from a user. In some embodiments of the disclosure, the proxy device 104 may establish a connection with the selected connected device and receive information related to the connected device (e.g., a device identifier). In some embodiments, an additional step of authenticating that a user owns the connected device may be required by the proxy device in order to establish a connection. For example, the user may be required to enter a password for the connected device or press a button located on the connected device. Information related to the connected device may be presented to a user within a graphical user interface (GUI) executed from the proxy device 104. In some embodiments, the GUI may be presented on a separate device in communication with the proxy device 104 (e.g., mobile device 116). In at least some embodiments, the proxy device 104 may provide an encryption key (e.g., a symmetric encryption key) to the connected device upon determining that the user of the proxy device 104 is also a user of the connected device 102. This enables the two devices to establish secure communications in future transactions.

The proxy device 104 may also establish a connection with a processing server 106 that provides back end support for the proxy device 104 by maintaining and managing transaction-related activities. In some embodiments, upon selection of the connected device by the user, the proxy device 104 may transmit information related to the connected device 102 to the processing server 106. The processing server 106 may retrieve transaction processing information to be associated with the connected device and may send that transaction processing information to the proxy device 104. In this way, the transaction processing information may be provisioned onto the proxy device 104 for a particular connected device 102. The transaction processing information may include an access credential, consumer identifier, and/or protocol information.

The processing server 106 may be any type of computing device, including a remotely located server computer, configured to perform one or more actions on behalf of the proxy device 104. Additionally, it should be noted that in some embodiments, the processing server 106 may be embodied by one more virtual machines implemented in a hosted computing environment. The hosted computing environment may include one or more rapidly provisioned and released computing resources, which computing resources may include computing, networking, and/or storage devices. A hosted computing environment may also be referred to as a cloud-computing environment. In some embodiments, the processing server 106 may be configured to provision information onto the proxy device 104.

In some examples, the communication network 108 and/or the transaction processing network 112 may include any one or a combination of many different types of networks, such as cable networks, the Internet, wireless networks, cellular networks, and other private and/or public networks. In addition, the communication network 108 and/or transaction processing network 112 may comprise multiple different networks. For example, the proxy device 104 may utilize a 3G network to communicate with a wireless router, which may then route the communication over a public network (e.g., the Internet) to the processing server 106. In some embodiments, the transaction processing network 112 may be an electronic payment network (e.g., VisaNet).

Transaction server 110 may be any computing device or plurality of computing devices configured to initiate a transaction. In some embodiments, the transaction server 110 may be associated with an electronic commerce site. For example, the transaction server may maintain a catalog of items and/or services available for purchase by a user. The transaction server may also be associated with a utility company or other resource provider. In some embodiments, the transaction server may enable a user to pay a bill or other outstanding debt related to resource acquisition. The transaction server 110 may also be configured to complete a transaction upon receiving an authorization response message indicating that a transaction has been approved.

In some embodiments, the transaction server 110 may be in communication with an acquirer computer. An acquirer computer may be any computing device or plurality of computing devices configured to process transaction information received from the transaction server 110 and generate an authorization request message to be transmitted to the authorization entity 114. In some embodiments, the acquirer computer may be owned and/or operated by a banking institute with which the operator of the transaction server 110 maintains an account.

Authorization entity 114 may be any computing device or plurality of computing devices configured to receive an authorization request message for a transaction, authorize or decline the transaction, and provide an authorization response message based on whether the transaction has been authorized or declined. The authorization entity 114 may determine whether to authorize or decline the transaction based on information associated with the transaction. In some embodiments, the authorization entity 114 may be an issuer of a payment account (e.g., a credit card).

For simplicity of illustration, a certain number of components are shown in FIG. 1. It is understood, however, that embodiments of the invention may include more than one of each component. In addition, some embodiments of the invention may include fewer than or greater than all of the components shown in FIG. 1. In addition, the components in FIG. 1 may communicate via any suitable communication medium (including the internet), using any suitable communications protocol.

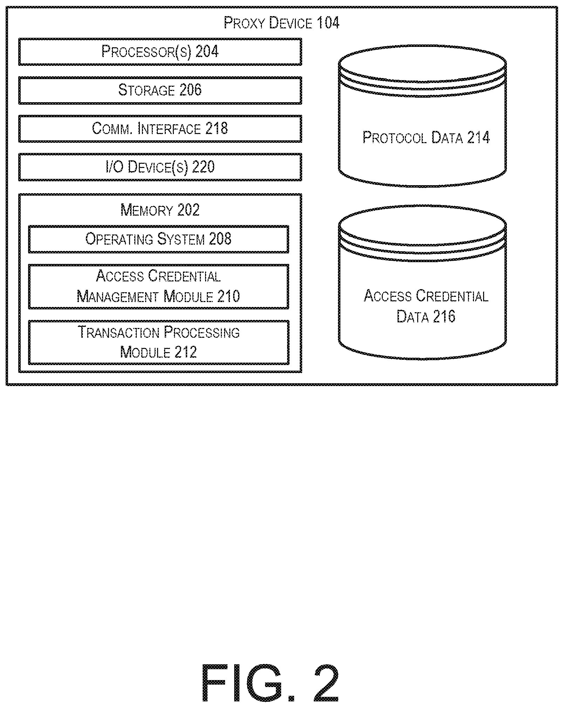

**FIG. 2** depicts an example proxy device configured to store and manage access credentials and conduct transactions on behalf of connected devices in accordance with at least some embodiments. The depicted proxy device may be an example proxy device 104 of FIG. 1.

The proxy device 104 may be any type of computing device capable of interacting with one or more connected devices. In some embodiments, the proxy device 104 may be an electronic device that enables network access for one or more devices (e.g., a wireless router). In at least some embodiments, the proxy device 104 may include at least one memory 202 and one or more processing units (or processor(s)) 204. The processor(s) 204 may be implemented as appropriate in hardware, computer-executable instructions, firmware or combinations thereof. Computer-executable instruction or firmware embodiments of the processor(s) 204 may include computer-executable or machine executable instructions written in any suitable programming language to perform the various functions described.

The memory 202 may store program instructions that are loadable and executable on the processor(s) 204, as well as data generated during the execution of these programs. Depending on the configuration and type of proxy device 104, the memory 202 may be volatile (such as random access memory (RAM)) and/or non-volatile (such as read-only memory (ROM), flash memory, etc.). The proxy device 104 may also include additional storage 206, such as either removable storage or non-removable storage including, but not limited to, magnetic storage, optical disks, and/or tape storage. The disk drives and their associated computer-readable media may provide non-volatile storage of computer-readable instructions, data structures, program modules, and other data for the proxy device. In some embodiments, the memory 202 may include multiple different types of memory, such as static random access memory (SRAM), dynamic random access memory (DRAM) or ROM.

The memory 202 of proxy device 104 may include a secure execution environment such as a secure memory (e.g., Smartcard based technology available in low-power devices). In some embodiments, the secure memory may include a secure element. A secure element (SE) can be a tamper-resistant platform (typically a one chip secure microcontroller) capable of securely hosting applications and their confidential and cryptographic data (e.g. key management) in accordance with the rules and security requirements set forth by a set of well-identified trusted authorities.

Information provisioned by a processing server onto the proxy device 104 may be stored in the secure memory. The proxy device 104 may include secure key storage to protect data at rest and encryption keys (i.e. a shared secret). The encryption keys could be unique-derived keys (UDKs), which can be derived from user account information and other unique information. A benefit to using UDKs is that the UDKs do not need to be transported to the devices that use them, but they can be generated by those devices using information known to those devices. The proxy device 104 may also store instructions for communicating with other devices and/or instructions for initiating a payment transaction.

Turning to the contents of the memory 202 in more detail, the memory 202 may include an operating system 208 and one or more application programs or services for implementing the features disclosed herein including at least a module for managing access credentials and transaction protocols associated with a connected device (access credential management module 210) and/or a module for assessing transaction requests received from a connected device and initiating a transaction on behalf of the connected device (transaction processing module 212). The memory 202 may also include protocol data 214, which provides data associated with one or more transaction protocols and access credential data 216, which provides information on access credentials for one or more connected devices.

In some embodiments, the access credential management module 210 may, in conjunction with the processor 204, be configured to identify one or more access credentials associated with a particular connected device. In some embodiments, the proxy device may utilize a single access credential associated with the proxy device to complete each transaction.

In some embodiments, the transaction processing module 212 may, in conjunction with the processor 204, be configured to determine whether a requested transaction is in compliance with one or more protocols related to the transaction and/or the connected device. For example, the transaction processing module 212 may be programmed to cause the connected device 102 to identify one or more protocols relevant to a connected device. In some embodiments, protocols may be identified based on a transaction amount, the type of connected device to which the transaction request is related, an amount of the transaction, or any other suitable factor. Upon determining that the transaction is in compliance with each of the relevant protocols, the proxy device may initiate the requested transaction.

The proxy device 104 may also contain communications interface(s) 218 that enable the proxy device 104 to communicate with a stored database, another computing device or server, one or more terminal devices, connected devices, and/or other electronic devices on a network. The proxy device 104 may also include input/output (I/O) device(s) and/or ports 220, such as for enabling connection with a keyboard, a mouse, a pen, a voice input device, a touch input device, a display, speakers, a printer, etc.

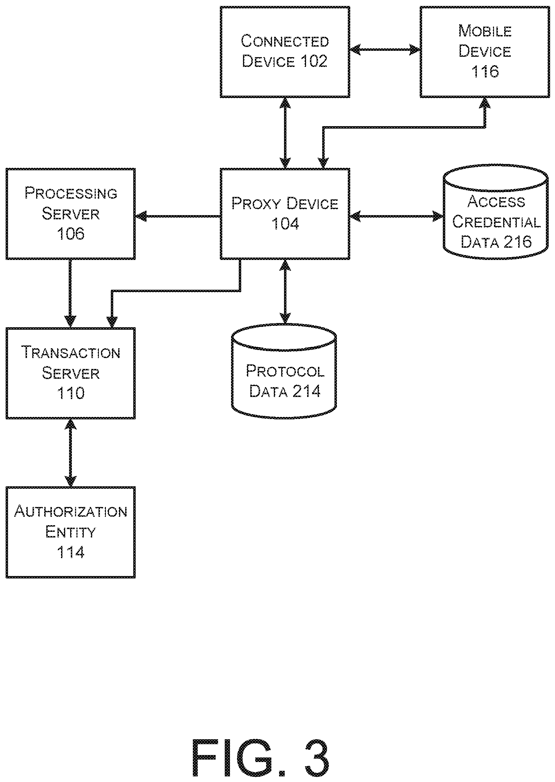

**FIG. 3** depicts an example data flow that may be implemented in accordance with at least some embodiments. The data flow depicted in FIG. 3, may be implemented at least by the example architecture depicted in FIG. 1. In FIG. 3, a proxy device 104 may receive a request to complete a transaction. The received request may be encrypted and/or received via a secure channel.

In some embodiments, the request to complete a transaction may be received from a connected device 102. For example, upon detecting that one or more predetermined conditions have been met, the connected device 102 may initiate a transaction by transmitting a request to the proxy device. In some embodiments, the request may be received from a mobile device 116. For example, a user may initiate a request to obtain a resource using his or her mobile device. In this example, the proxy device may, upon receiving the request, establish a communication session with the connected device to identify a type and/or quantity of resources required by the connected device 102. Upon receiving a request, the proxy device 104 may identify a connected device related to the request. For example, the request may include a device identifier. The proxy device 104 may query a database of access credentials 216 for the device identifier to determine the identity of the connected device 102 and / or an access credential to be used in the transaction.

In some embodiments, the proxy device 104 may identify one or more protocols relevant to the transaction. For example, the proxy device 104 may retrieve a set of protocols to be applied to the transaction. Before initiating the requested transaction, the proxy device 104 may determine whether the transaction is in compliance with the set of protocols. In some embodiments, the protocol data may include user preference data. For example, the protocol data may include an indication of a user's product and/or replenishment preferences. In some embodiments, protocol data in a protocol data database 214 may be provided to the proxy device 104 by a processing server 106 which maintains an account associated with the user.

In some embodiments, the proxy device 104 may communicate with a processing server 106 to initiate a transaction. For example, the proxy device 104 may generate a request that includes an access credential and other transaction details to be provided to the processing server 106. In this example, the processing server may initiate the transaction by forwarding the request to the appropriate transaction server(s) 110. In some embodiments, the proxy device 104 may provide a transaction request to a transaction server 110 directly to initiate the transaction. The transaction server 110, upon receiving the request, may generate an authorization request to be provided to an authorization entity 114 in order to determine whether to fulfill the transaction request. Upon receiving a positive response from the authorization entity 114, the transaction server may complete the transaction.

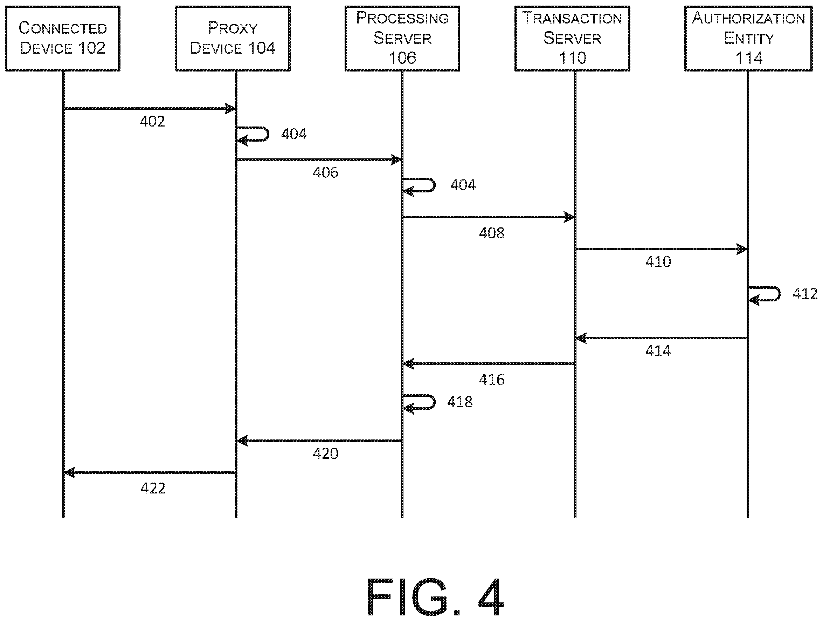

**FIG. 4** depicts a data flow diagram illustrating a process for conducting a transaction using the described platform in accordance with at least some embodiments. In FIG. 4, a connected device 102, which may be a machine-to-machine device or other communication-enabled electronic device, determines that a transaction should be conducted with respect to a resource (e.g., data, software, goods, services, etc.). This determination may be made without human intervention. For example, the connected device 102 may utilize a set of protocols (e.g., rules) that dictate under what circumstances the resource should be obtained. The connected device 102 may establish a communication session with a proxy device 104 to initiate the transaction at 402. The proxy device 104 may, in some embodiments, be in communication with a processing server 106 that performs one or more processing actions on behalf of the proxy device 104.

In a first example, the connected device 102 may include a protocol that indicates a payment for resource usage should be made on the first of each month. In this example, the connected device 102, upon determining that a date/time condition in the protocols has been met, may initiate contact with the proxy device to request a transaction. The connected device 102 may communicate, via the communication session, an amount of a resource that it requires. The proxy device 104 (and/or the processing server 106 on behalf of the proxy device 104) may consult a rate chart and/or an item catalog to determine an appropriate reimbursement for the requested amount of the resource. In some embodiments, the proxy device 104 may also identify a shipping cost related to the transaction. Once the details of the transaction have been identified, the proxy device 104 may determine whether the transaction is in compliance with one or more protocols associated with the transaction at 404. In some embodiments, process step 404 may be performed by the processing server 106. If the transaction details (amount of the resource, proposed reimbursement, shipping costs, etc.) are in compliance with protocols stored on the proxy device 104, then a transaction request may be initiated from either the proxy device 104 at 406 or the processing server 106 at 408.

The transaction request may be provided to a transaction server 110 that provides access to the requested resource. In some embodiments, the transaction server may be identified based on an availability and/or pricing of the requested resource. Upon receiving the transaction request, the transaction server may generate an authorization request message to determine if the transaction is approved. The transaction server 110 may provide the authorization request message to an authorization entity 114 at 410.

For purposes of illustration, the connected device 102 may be a smart refrigerator, while the proxy device 104 may be a wireless router capable of performing the described functionality. The transaction server 110 may be a server computer that is operated by a merchant such as a grocery store. The connected device 102 may determine (through internal sensors) that it is low on eggs and milk. Upon making this determination, the connected device 102 may contact the proxy device 104 in order to initiate a transaction to obtain more eggs and milk. The proxy device may subsequently identify a transaction server operated by a grocery store that is able to fulfill the request by the connected device. The proxy device 104 may subsequently send a transaction request to the transaction server to initiate the transaction. When contacting the grocery store server, the proxy device 104 may provide a payment token or other access credential to the transaction server, and the grocery store may conduct the payment transaction as further explained below. After the payment process has concluded, the grocery store may then automatically send the milk and eggs to the household that has the connected device 102. All of this may be performed without any user intervention.

Although presented as a single block, the authorization entity 114 may actually comprise multiple entities, including one or more of an acquirer, a payment processing network, and/or an issuer. In some embodiments, the transaction server 110 may provide transaction details (and access credentials) to an acquirer computer at 410. The acquirer computer receives the transaction details and access credentials and determines an appropriate payment entity to route an authorization request message to. In some embodiments, the format and/or characters of the payment information may be used to indicate the payment entity. For example, a payment information number beginning with 4012 may be associated with a payment processing network such as Visanet. In some embodiments, the acquirer computer may determine that the payment information is associated with a token. Token information may be maintained by token service provider. A token service provider may be an entity, not necessarily associated with the actual payment entity, that stores and maintains relationships between tokens and actual account numbers used for payment.

Once the acquirer computer has determined where an authorization request is to be routed, the acquirer computer may transmit the authorization request message to the appropriate authorization computer. If the payment information comprises a token, then the authorization request message may be routed to a token service provider. An exemplary transaction processing network may include VisaNet™. Transaction processing networks such as VisaNet™ are able to process credit card transactions, debit card transactions, and other types of commercial transactions. VisaNet™, in particular, includes a VIP system (Visa Integrated Payments system) which processes authorization requests and a Base II system which performs clearing and settlement services. The transaction processing network may use any suitable wired or wireless network, including the Internet.

Once the appropriate authorization computer has received the authorization request message, it may determine if the transaction should be approved at 412. For example, the authorization computer may decline the transaction if there is a high likelihood of fraud. In another example, the authorization computer may decline the transaction if the payment account has insufficient funds. Once the authorization computer has decided whether to approve or decline the transaction, an authorization response message may be returned to the acquirer computer.

The acquirer computer may, upon receiving the response, determine whether the transaction has been approved or declined. In either case, the authorization response message may be provided to the transaction server at 414. If the transaction has been authorized, the transaction server 110 may complete the transaction using the provided access credential and may initiate fulfillment of the requested resource. The completion of the transaction may be conducted without human intervention. For example, the transaction may be conducted without acquiring authorization from a user or otherwise requiring action on a user's behalf.

In some embodiments, the transaction server 110 may provide an indication of the status of the transaction to the processing server 106 at 416. The processing server may update an account associated with a user of the connected device to reflect the transaction status at 418. For example, the processing server 106 may add a receipt to a user's account for the requested resources. In some embodiments, the processing server 106 and/or transaction server 110 may communicate the status of the transaction to the proxy device 104 at 420.

In some embodiments, the proxy device 104 may update, upon receiving an indication of the status of the transaction, one or more protocols and/or replenishment conditions stored on the connected device 102 at 422. For example, the proxy device 104 may indicate that the resource is currently on order to prevent the connected device from re-ordering the resource.

It should be noted that although the proxy device is depicted as being a separate device from the processing server 106, the two devices may actually be the same device. For example, the proxy device 104 may generate a transaction request and provide it to the transaction server 110 directly.

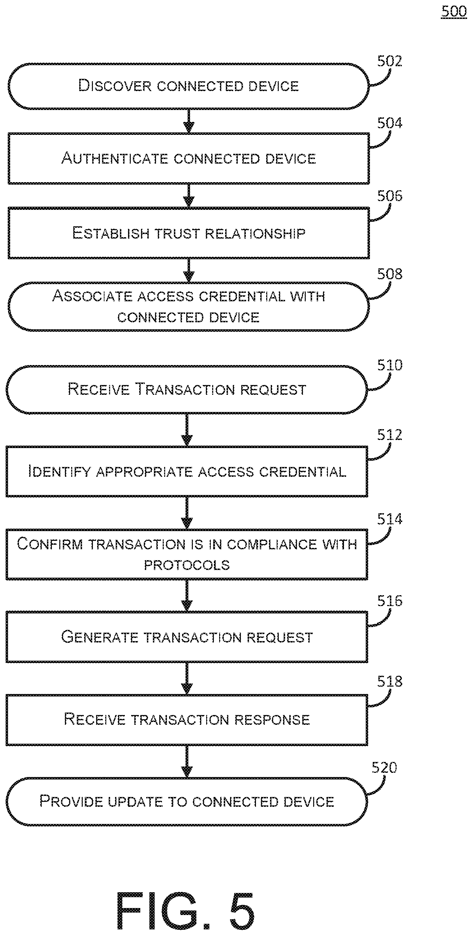

**FIG. 5** depicts a flow diagram illustrating a process for enrolling one or more connected devices and subsequently conducting transactions in accordance with at least some embodiments. The first segment on FIG. 5 (502-508) depicts an enrollment process for establishing a trusted relationship between a proxy device and one or more connected devices. The second segment of FIG. 5 (510-520) depicts an initiation of a transaction on behalf of a connected device enrolled with the proxy device.

Some or all of any of the processes described herein (or variations and/or combinations thereof) may be performed under the control of one or more computer systems configured with executable instructions and may be implemented as code (e.g., executable instructions, one or more computer programs or one or more applications). In accordance with at least one embodiment, the process 500 of FIG. 5 may be performed by at least the proxy device 104 depicted in FIG. 1 and FIG. 2. The code may be stored on a computer-readable storage medium, for example, in the form of a computer program including a plurality of instructions executable by one or more processors. The computer-readable storage medium may be non-transitory.

Process 500 may begin at 502, when an enrollment process is initiated in relation to the proxy device. In some embodiments, the enrollment process may be initiated by activating a mechanism on the proxy device (e.g., pressing a button located on the proxy device). In some embodiments, the enrollment process may be initiated via a user interface. For example, a user may connect to the proxy device via a network connection using a separate computing device and may be presented with connected device enrollment options. To begin the enrollment process, the proxy device may perform a device discovery action to identify potential connected devices. In some embodiments, this may involve identifying one or more communicatively connected electronic devices within range of the proxy device using one or more communication means. In some embodiments, a connected device may be connected directly (i.e., hardwired) to the proxy device.

Upon identifying one or more potential connected devices, the proxy device may be programmed to cause a connected device authenticate one or more connected devices at 504. In some embodiments, the proxy device may request information on security protocols and/or security certificates from the connected device. In some embodiments, a user may be required to enter a password at the connected device and/or press a button on the connected device to establish that the user is in possession of the connected device.

Once a connected device has been authenticated, the proxy device may establish a trusted relationship with the connected device at 506. In some embodiments, the proxy device may provide an encryption key to the connected device to be used in future communications. The encryption key may be a symmetric or asymmetric encryption key that can be used in known encryption processes such as DES, TDES, AES, and ECC. In some embodiments, the proxy device may store an indication of the connected device (e.g., a device identifier) in a data store of trusted connected devices. In some embodiments, the proxy device may provide credentials to be used when opening communication sessions in the future. In some embodiments, the connected device may provide an indication of a transaction server to be used in future transactions (e.g., a uniform resource locator (URL)). In some embodiments, the proxy device and the connected devices that it communicates with may communicate using public-private key pairs to encrypt data (e.g., using a public key) and sign data (e.g., using a private key) to verify its source. In such embodiments, it may also be desirable for the proxy device to have a different shared secret (e.g., a password or cryptogram) associated with the different devices. This shared secret could be encrypted, hashed, or otherwise altered such that the receiving party with the same shared secret can verify and authenticate the communication.

The proxy device may associate an access credential with the connected device at 508. In some embodiments, the proxy device may maintain a single access credential associated with the proxy device to be used in all transactions conducted by the proxy device. In some embodiments, upon enrollment of the connected device, the proxy device may communicate the enrollment data to the processing server. The processing server, in turn, may generate an access credential specific to that connected device and may provide the generated access credential to the proxy device to be stored in association with the connected device.

In some embodiments, the processing server may also identify one or more protocol sets to be associated with the connected device. The protocol sets may be selected based on a type of the connected device, user preferences and/or settings, credit limits, or any other suitable factors. In some embodiments, the processing server may maintain a user account for the user of the connected device. The user may be provided with the capability to log into an account website maintained by the processing server in order to specific one or more user settings to be applied to the connected device. In some embodiments, the user may specify a date upon which a transaction should be initiated, a minimum or maximum currency value to be associated with transactions conducted by the connected device, conditions upon which further user authorization is required, a quantity and/or type of resource to be replenished (in some cases, a particular brand), a merchant from which the resource should be obtained, or any other suitable user preference. Each of these user preferences may be stored as protocol set data. The processing server may, upon receiving enrollment information for a connected device, identify any potentially relevant protocol sets and provide those protocol sets to the proxy device in relation to the connected device. In some embodiments, the proxy device may further communicate at least a subset of the provided protocol set to the connected device. For example, the proxy device may provide an indication of conditions upon which a transaction should be initiated to the connected device.

Once a connected device has been enrolled, the proxy device may receive a request to conduct a transaction from that connected device at 510. The request may include one or more of an indication of at least one resource, a transaction server, a currency amount, or any other suitable transaction-related data. In some embodiments, the request may be encrypted using an encryption key provided to the connected device during the enrollment process.

Upon receiving the request, the proxy device may identify an appropriate access credential to be used in the transaction at 512. In some embodiments, the proxy device may query a data store to identify an access credential associated with the connected device. In some embodiments, the access credential may be provided in the request received from the connected device. In some embodiments, the proxy device may utilize single access credential (or set of access credentials) for each transaction that it initiates on behalf of the enrolled connected devices.

In some embodiments, the proxy device may confirm that the requested transaction is in compliance with one or more relevant protocols at 514. In some embodiments, the proxy device may identify each of the relevant protocol set data and determine whether any/all conditions have been satisfied. In some embodiments, the proxy device may forward details of the potential transaction to a processing server, which may subsequently determine whether that transaction is in compliance with relevant protocol set data.

Upon determining that the transaction is in compliance with relevant protocols, the proxy device may generate a transaction request at 516. The transaction request may be provided to a relevant transaction server. In some embodiments, the proxy device may receive an indication of the relevant transaction server in the request received from the connected device. In some embodiments, the proxy device may determine an appropriate transaction server based on the transaction type, a type of the connected device, a brand of the connected device, or any other suitable transaction-related information. In some embodiments, the processing server may determine the relevant transaction server. For example, the processing server may maintain a listing of transaction servers each corresponding to different electronic marketplaces. The processing server may determine an appropriate transaction server based on availability and/or pricing of one or more resources from each electronic marketplace. In some embodiments, the processing server may determine that multiple transaction servers are appropriate. For example, multiple transactions may be initiated with multiple transactions servers, each for a subset of the resources requested by the connected device.

In some embodiments, the proxy device and/or processing server may receive a transaction response at 518. For example, the transaction server may provide an indication as to whether the transaction has been completed or not. In some embodiments, the transaction response may include a receipt, which may subsequently be posted to an account associated with the user of the proxy device. In some embodiments, the transaction response may simply include an indication as to whether the transaction was approved or declined.

In some embodiments, the proxy device may provide an update to the connected device at 520. For example, the proxy device may provide instructions to the connected device to update one or more conditions upon which the connected device bases transaction requests. For example, if the connected device is a water purification device which is programmed to cause processors within the purification device to automatically order new filters when the current filter is below 20%, then the proxy device may provide instructions that filters have been ordered and no new transaction requests should be submitted for the remaining life of the current filter. In another example involving a water purification device, the proxy device may determine that the newly ordered filter is a two-pack and may subsequently provide instructions not to request a new transaction for a filter the next time that the water filter is at 20% either.

A computer system can include a plurality of the same components or subsystems, e.g., connected together by external interface or by an internal interface. In some embodiments, computer systems, subsystem, or apparatuses can communicate over a network. In such instances, one computer can be considered a client and another computer a server, where each can be part of a same computer system. A client and a server can each include multiple systems, subsystems, or components.

Embodiments of the invention provide for a number of technical advantages. For example, embodiments of the invention enable connected devices to conduct transactions without direct connectivity to a communication network. For example, a connected device may, upon determining that one or more conditions have been met, initiate a transaction via a secure connection with a proxy device. Additionally, the invention enables a connected device to initiate a transaction without transmitting access credentials over a wireless communication channel, preventing interception by unauthorized third parties and reducing fraud. This invention also provides protocol compliance checks performed by a proxy device, reducing the processing needed to be completed by the connected device itself.

It should be understood that any of the embodiments of the present invention can be implemented in the form of control logic using hardware (e.g. an application specific integrated circuit or field programmable gate array) and/or using computer software with a generally programmable processor in a modular or integrated manner. As used herein, a processor includes a single-core processor, multi-core processor on a same integrated chip, or multiple processing units on a single circuit board or networked. Based on the disclosure and teachings provided herein, a person of ordinary skill in the art will know and appreciate other ways and/or methods to implement embodiments of the present invention using hardware and a combination of hardware and software.

Any of the software components or functions described in this application may be implemented as software code to be executed by a processor using any suitable computer language such as, for example, Java, C, C++, C#, Objective-C, Swift, or scripting language such as Perl or Python using, for example, conventional or object-oriented techniques. The software code may be stored as a series of instructions or commands on a computer readable medium for storage and/or transmission, suitable media include random access memory (RAM), a read only memory (ROM), a magnetic medium such as a hard-drive or a floppy disk, or an optical medium such as a compact disk (CD) or DVD (digital versatile disk), flash memory, and the like. The computer readable medium may be any combination of such storage or transmission devices.

Such programs may also be encoded and transmitted using carrier signals adapted for transmission via wired, optical, and/or wireless networks conforming to a variety of protocols, including the Internet. As such, a computer readable medium according to an embodiment of the present invention may be created using a data signal encoded with such programs. Computer readable media encoded with the program code may be packaged with a compatible device or provided separately from other devices (e.g., via Internet download). Any such computer readable medium may reside on or within a single computer product (e.g. a hard drive, a CD, or an entire computer system), and may be present on or within different computer products within a system or network. A computer system may include a monitor, printer, or other suitable display for providing any of the results mentioned herein to a user.

The above description is illustrative and is not restrictive. Many variations of the invention will become apparent to those skilled in the art upon review of the disclosure. The scope of the invention should, therefore, be determined not with reference to the above description, but instead should be determined with reference to the pending claims along with their full scope or equivalents.

One or more features from any embodiment may be combined with one or more features of any other embodiment without departing from the scope of the invention.

A recitation of "a", "an" or "the" is intended to mean "one or more" unless specifically indicated to the contrary.

## Claims

1. A method comprising:
detecting (502), by a short range communication means of a proxy device having direct access to a communication network via a network communication means, a plurality of electronic devices within a communication range of the proxy device, each of the plurality of electronic devices lacking direct access to the communication network;
establishing (504, 506), via the short range communication means of the proxy device and a respective short range communication means of each electronic device, a trusted relationship with the respective electronic devices by authenticating each of the electronic devices during an enrollment process;
in response to establishing the trusted relationship, associating (508), by the proxy device, each of the electronic devices with an access credential;
receiving (510), via the short range communication means of the proxy device, from one of the electronic devices in the electronic devices, a request to conduct a transaction; and
initiating (516), by the network communication means of the proxy device via the communication network, the transaction on behalf of the electronic device using the access credential.

2. The method of claim 1, wherein the proxy device is in communication with a server via the communication network using the network communication means and initiating the transaction comprises causing the server to generate an authorization request message with the access credential.

3. The method of claim 1 or 2, further comprising determining (514) that the transaction is in compliance with one or more transaction protocols maintained in association with the electronic device.

4. The method of any preceding claim, wherein establishing (504, 506) the trusted relationship comprises providing an encryption key to the electronic devices such that future communications between the electronic devices and the proxy device are encrypted using the encryption key.

5. The method of any preceding claim, further comprising authenticating that a user of each of the electronic devices is also a user of the proxy device prior to establishing the trusted relationship.

6. The method of claim 5, wherein authenticating that the user of each of the electronic devices is also the user of the proxy device comprises requiring that the user enter a passcode at each of the electronic devices.

7. An apparatus (104) comprising:
a processor (204);
one or more short range communication means (218);
a communication means (218) for connecting to a network (108); and
a memory (202) including instructions that, when executed by the processor (204), cause the apparatus to, at least:
detect, using the one or more short range communication means, a plurality of electronic devices, each having a respective short range communication means, within a communication range of the apparatus, at least one of the plurality of electronic devices lacking a direct connection to the network (108);
establish, via the one or more short range communication means (218) and a respective short range communication means of each electronic device, a trusted relationship with each of the detected plurality of electronic devices by authenticating each of the detected plurality of electronic devices during an enrollment process;
in response to establishing the trusted relationship, creating an association between each of the plurality of electronic devices and an access credential;
receive, via the one or more short range communication means, from an electronic device of the plurality of electronic devices, a request to conduct a transaction; and
initiate, by the communication means (218) for connecting to the network, via the network (108), the transaction on behalf of the electronic device using the access credential.

8. The apparatus (104) of claim 7, wherein the short range communication means is one of a WiFi interface, a Bluetooth interface, a ZigBee interface, a near field communication (NFC) interface, or a radio frequency (RF) interface.

9. The apparatus (104) of claim 7 or 8, wherein the request to conduct the transaction is a request to purchase a resource.

10. The apparatus (104) of claim 7 or 8, wherein the request to conduct the transaction is a request to pay for resources consumed.

11. The apparatus (104) of any of claims 7 to 10, wherein the instructions further cause the apparatus to determine, based at least in part on the request to conduct the transaction, a transaction server associated with the request, the transaction server controlling access to a resource relating to the request.

12. The apparatus (104) of claim 11, wherein the memory further comprises instructions, executable by the processor, to cause the apparatus to:
generate a transaction request including one or more transaction details and the access credential; and
provide the transaction request to the transaction server.

13. The apparatus (104) of any of claims 7 to 12, wherein each of the plurality of electronic devices is associated with a different access credential.

14. A method comprising:
receiving, at a connected device via a short range communication means and in response to establishing a trusted relationship with a proxy device, an encryption key and a set of protocols from the proxy device, wherein the trusted relationship is established by authentication of the connected device by the proxy device during an enrollment process;
detecting, by the connected device, that one or more conditions set forth in the set of protocols has been met;
identifying, by the connected device, a transaction associated with the one or more conditions set forth in the set of protocols;
generating, by the connected device, a transaction request based on the identified transaction;
encrypting, by the connected device, the transaction request using the received encryption key; and
transmitting, via the short range communications means of the connected device, the transaction request to the proxy device to be completed via a network, the connected device lacking a direct connection to the network.

15. The method of claim 14, wherein detecting that one or more conditions set forth in the set of protocols has been met comprises:
receiving input from one or more sensors of the connected device; and
determining that the input meets one or more thresholds associated with the one or more conditions.

## Patentansprüche

1. Verfahren, Folgendes umfassend:
Erfassen (502), durch eine Kommunikationseinrichtung mit kurzer Reichweite eines Proxy-Geräts mit direktem Zugriff auf ein Kommunikationsnetzwerk über eine Netzwerkkommunikationseinrichtung, einer Vielzahl von elektronischen Geräten innerhalb einer Kommunikationsreichweite des Proxygeräts, wobei jedem der Vielzahl von elektronischen Geräten ein direkter Zugriff auf das Kommunikationsnetzwerk fehlt;
Erstellen (504, 506), über die Kommunikationseinrichtung mit kurzer Reichweite des Proxy-Geräts und eine entsprechende Kommunikationseinrichtung mit kurzer Reichweite jedes elektronischen Geräts, einer vertrauenswürdigen Beziehung mit den jeweiligen elektronischen Geräten durch Authentifizieren jedes der elektronischen Geräte während eines Registrierungsvorgangs;
in Reaktion auf das Erstellen der vertrauenswürdigen Beziehung, Zuordnen (508), durch das Proxy-Gerät, jedes der elektronischen Geräte zu einem Zugriffsberechtigungsnachweis;
Empfangen (510), über die Kommunikationseinrichtung mit kurzer Reichweite des Proxy-Geräts, einer Anforderung zur Durchführung einer Transaktion von einem der elektronischen Geräte in den elektronischen Geräten; und
Initiieren (516), durch die Netzwerkkommunikationseinrichtung des Proxygeräts über das Kommunikationsnetzwerk, der Transaktion im Namen des elektronischen Geräts unter Verwendung des Zugriffsberechtigungsnachweises.

2. Verfahren nach Anspruch 1, wobei das Proxy-Gerät mit einem Server über das Kommunikationsnetzwerk unter Verwendung der Netzwerkkommunikationseinrichtung in Kommunikation steht und das Einleiten der Transaktion umfasst, dass der Server veranlasst wird, eine Autorisierungsanforderungsnachricht mit dem Zugriffsberechtigungsnachweis zu generieren.

3. Verfahren nach Anspruch 1 oder 2, ferner umfassend das Bestimmen (514), dass die Transaktion einem oder mehreren Transaktionsprotokollen entspricht, die in Verbindung mit dem elektronischen Gerät geführt werden.

4. Verfahren nach einem der vorhergehenden Ansprüche, wobei das Erstellen (504, 506) der vertrauenswürdigen Beziehung das Bereitstellen eines Verschlüsselungscodes für die elektronischen Geräte umfasst, sodass zukünftige Kommunikationen zwischen den elektronischen Geräten und dem Proxy-Gerät unter Verwendung des Verschlüsselungscodes verschlüsselt werden.

5. Verfahren nach einem der vorhergehenden Ansprüche, ferner umfassend, vor dem Erstellen der vertrauenswürdigen Beziehung, das Authentifizieren, dass ein Benutzer jedes der elektronischen Geräte auch ein Benutzer des Proxy-Geräts ist.

6. Verfahren nach Anspruch 5, wobei das Authentifizieren, dass der Benutzer jedes der elektronischen Geräte auch der Benutzer des Proxy-Geräts ist, das Erfordernis umfasst, dass der Benutzer einen Passcode an jedem der elektronischen Geräte eingibt.

7. Vorrichtung (104), Folgendes umfassend:
einen Prozessor (204);
eine oder mehrere Kommunikationseinrichtungen mit kurzer Reichweite (218);
eine Kommunikationseinrichtung (218) zum Verbinden mit einem Netzwerk (108); und
einen Speicher (202), der Anweisungen beinhaltet, die, wenn sie von dem Prozessor (204) ausgeführt werden, die Vorrichtung zumindest zu Folgendem veranlassen:
Erfassen, unter Verwendung der einen oder der mehreren Kommunikationseinrichtungen mit kurzer Reichweite, einer Vielzahl von elektronischen Geräten, die jeweils eine entsprechende Kommunikationseinrichtung mit kurzer Reichweite aufweisen, innerhalb einer Kommunikationsreichweite der Vorrichtung, wobei zumindest einem der Vielzahl von elektronischen Geräten eine direkte Verbindung zum Netzwerk (108) fehlt;
Erstellen, über die eine oder mehrere Kommunikationseinrichtungen mit kurzer Reichweite (218) und eine entsprechende Kommunikationseinrichtung mit kurzer Reichweite jedes elektronischen Geräts, einer vertrauenswürdigen Beziehung mit jedem der erfassten Vielzahl von elektronischen Geräten durch Authentifizieren jedes der erfassten Vielzahl von elektronischen Geräten während eines Registrierungsvorgangs;
in Reaktion auf das Erstellen der vertrauenswürdigen Beziehung, das Erstellen einer Zuordnung zwischen jedem der Vielzahl von elektronischen Geräten und einem Zugangsberechtigungsnachweis;
Empfangen, über die eine oder die mehreren Kommunikationseinrichtungen mit kurzer Reichweite, von einem elektronischen Gerät der Vielzahl von elektronischen Geräten, einer Anforderung, eine Transaktion durchzuführen; und
Initiieren, durch die Kommunikationseinrichtung (218) zum Verbinden mit dem Netzwerk, über das Netzwerk (108), der Transaktion im Namen des elektronischen Geräts unter Verwendung des Zugangsberechtigungsnachweises.

8. Vorrichtung (104) nach Anspruch 7, wobei die Kommunikationseinrichtung mit kurzer Reichweite eines von einer WLAN-Schnittstelle, einer Bluetooth-Schnittstelle, einer ZigBee-Schnittstelle, einer Nahfeldkommunikationsschnittstelle (NFC) oder einer Hochfrequenzschnittstelle (HF-Schnittstelle) ist.

9. Vorrichtung (104) nach Anspruch 7 oder 8, wobei die Anforderung zum Durchführen der Transaktion eine Anforderung zum Kauf einer Ressource ist.

10. Vorrichtung (104) nach Anspruch 7 oder 8, wobei die Anforderung zum Durchführen der Transaktion eine Anforderung zum Bezahlen von konsumierten Ressourcen ist.

11. Vorrichtung (104) nach einem der Ansprüche 7 bis 10, wobei die Anweisungen ferner die Vorrichtung, basierend zumindest teilweise auf der Anforderung, die Transaktion durchzuführen, veranlassen, einen Transaktionsserver zu bestimmen, der der Anforderung zugeordnet ist, wobei der Transaktionsserver den Zugriff auf eine Ressource kontrolliert, die sich auf die Anforderung bezieht.

12. Vorrichtung (104) nach Anspruch 11, wobei der Speicher ferner Anweisungen umfasst, die durch den Prozessor ausführbar sind, um die Vorrichtung zu veranlassen:
eine Transaktionsanforderung, die ein oder mehrere Transaktionsdetails und den Zugriffsberechtigungsnachweis beinhaltet, zu generieren; und
dem Transaktionsserver die Transaktionsanforderung bereitzustellen.

13. Vorrichtung (104) nach einem der Ansprüche 7 bis 12, wobei jedes der Vielzahl von elektronischen Geräten einem unterschiedlichen Zugriffsberechtigungsnachweis zugeordnet ist.

14. Verfahren, Folgendes umfassend:
Empfangen, an einem verbundenen Gerät über eine Kommunikationseinrichtung mit kurzer Reichweite und in Reaktion auf das Erstellen einer vertrauenswürdigen Beziehung mit einem Proxy-Gerät, eines Verschlüsselungscodes und eines Satzes von Protokollen von dem Proxy-Gerät, wobei die vertrauenswürdige Beziehung durch die Authentifizierung des verbundenen Geräts durch das Proxy-Gerät während eines Registrierungsvorgangs erstellt wird;
Erfassen, durch das verbundene Gerät, dass eine oder mehrere Bedingungen, die im Satz von Protokollen dargelegt sind, erfüllt wurden;
Identifizieren, durch das verbundene Gerät, einer Transaktion, die der einen oder den mehreren im Satz von Protokollen dargelegten Bedingungen zugeordnet ist;
Generieren, durch das verbundene Gerät, einer Transaktionsanforderung basierend auf der identifizierten Transaktion;
Verschlüsseln, durch das verbundene Gerät, der Transaktionsanforderung unter Verwendung des empfangenen Verschlüsselungscodes; und
Übertragen, über die Kommunikationseinrichtung mit kurzer Reichweite des verbundenen Geräts, der Transaktionsanforderung an das Proxy-Gerät, die über ein Netzwerk ausgeführt werden soll, wobei dem verbundenen Gerät eine direkte Verbindung zum Netzwerk fehlt.

15. Verfahren nach Anspruch 14, wobei das Erfassen, dass eine oder mehrere Bedingungen im Satz von Protokollen erfüllt wurden, Folgendes umfasst:
Empfangen einer Eingabe von einem oder mehreren Sensoren des verbundenen Geräts; und
Bestimmen, dass die Eingabe einen oder mehrere Schwellenwerte erreicht, die der einen oder den mehreren Bedingungen zugeordnet sind.

## Revendications

1. Procédé comprenant :
la détection (502), par un moyen de communication à courte portée d'un dispositif mandataire ayant un accès direct à un réseau de communication via un moyen de communication de réseau, d'une pluralité de dispositifs électroniques à l'intérieur d'une portée de communication du dispositif mandataire, chacun parmi la pluralité de dispositifs électroniques étant dépourvu d'accès direct au réseau de communication ;
l'établissement (504, 506), via le moyen de communication à courte portée du dispositif mandataire et du moyen de communication à courte portée respectif de chaque dispositif électronique, d'une relation de confiance avec les dispositifs électroniques respectifs par l'authentification de chacun des dispositifs électroniques durant un processus d'inscription ;
en réponse à l'établissement de la relation de confiance, l'association (508), par le dispositif mandataire, de chacun des dispositifs électroniques avec un justificatif d'accès ;
la réception (510), via le moyen de communication à courte portée du dispositif mandataire, à partir d'un des dispositifs électroniques dans les dispositifs électroniques, d'une demande pour exécuter une transaction ; et
l'initiation (516), par le moyen de communication réseau du dispositif mandataire via le réseau de communication, de la transaction pour le compte du dispositif électronique à l'aide du justificatif d'accès.

2. Procédé selon la revendication 1, dans lequel le dispositif mandataire est en communication avec un serveur via le réseau de communication à l'aide du moyen de communication de réseau et l'initiation de la transaction comprend le fait d'amener le serveur à générer un message de demande d'autorisation avec le justificatif d'accès.

3. Procédé selon la revendication 1 ou 2, comprenant en outre la détermination (514) que la transaction est en conformité avec un ou plusieurs protocoles de transaction maintenus en association avec le dispositif électronique.

4. Procédé selon l'une quelconque des revendications précédentes, dans lequel l'établissement (504, 506) de la relation de confiance comprend la fourniture d'une clé de cryptage aux dispositifs électroniques de sorte que des communications futures entre les dispositifs électroniques et le dispositif mandataire soient cryptées à l'aide de la clé de cryptage.

5. Procédé selon l'une quelconque des revendications précédentes, comprenant en outre l'authentification qu'un utilisateur de chacun des dispositifs électroniques est également un utilisateur du dispositif mandataire avant l'établissement de la relation de confiance.

6. Procédé selon la revendication 5, dans lequel l'authentification que l'utilisateur de chacun des dispositifs électroniques est également l'utilisateur du dispositif mandataire comprend la demande que l'utilisateur entre un mot de passe sur chacun des dispositifs électroniques.

7. Appareil (104) comprenant :
un processeur (204) ;
un ou plusieurs moyens de communication à courte portée (218) ;
un moyen de communication (218) pour la connexion à un réseau (108) ; et
une mémoire (202) comportant des instructions qui, lorsqu'elles sont exécutées avec le processeur (204), amènent l'appareil à, au moins :
détecter, à l'aide du ou des moyens de communication à courte portée, une pluralité de dispositifs électroniques, chacun ayant un moyen de communication à courte portée respectif, à l'intérieur d'une portée de communication de l'appareil, au moins un parmi la pluralité de dispositifs électroniques étant dépourvu d'une connexion directe au réseau (108) ;
établir, via le ou les moyens de communication à courte portée (218) et un moyen de communication à courte portée respectif de chaque dispositif électronique, une relation de confiance avec chacun parmi la pluralité détectée de dispositifs électroniques par l'authentification de chacun parmi la pluralité détectée de dispositifs électroniques durant un processus d'inscription ;
en réponse à l'établissement de la relation de confiance, la création d'une association entre chacun parmi la pluralité de dispositifs électroniques et un justificatif d'accès ;
recevoir, via le ou les moyens de communication à courte portée, à partir d'un dispositif électronique parmi la pluralité de dispositifs électroniques, une demande pour exécuter une transaction ; et
initier, par les moyens de communication (218) pour la connexion au réseau, via le réseau (108), la transaction pour le compte du dispositif électronique à l'aide du justificatif d'accès.

8. Appareil (104) selon la revendication 7, dans lequel le moyen de communication à courte portée est l'un parmi une interface WiFi, une interface Bluetooth, une interface ZigBee, une interface de communication en champ proche (CCP) ou une interface de radiofréquence (RF).

9. Appareil (104) selon la revendication 7 ou 8, dans lequel la demande pour exécuter la transaction est une demande pour acheter une ressource.

10. Appareil (104) selon la revendication 7 ou 8, dans lequel la demande pour exécuter la transaction est une demande pour payer les ressources consommées.

11. Appareil (104) selon l'une quelconque des revendications 7 à 10, dans lequel les instructions amènent en outre l'appareil à déterminer, sur base au moins en partie de la demande pour exécuter la transaction, un serveur de transaction associé à la demande, le serveur de transaction contrôlant l'accès à une ressource concernant la demande.

12. Appareil (104) selon la revendication 11, dans lequel la mémoire comprend en outre des instructions, exécutables par le processeur, pour amener l'appareil à :
générer une demande de transaction comprenant un ou plusieurs détails de transaction et le justificatif d'accès ; et
fournir la demande de transaction au serveur de transaction.

13. Appareil (104) selon l'une quelconque des revendications 7 à 12, dans lequel chacun parmi la pluralité de dispositifs électroniques est associé à un justificatif d'accès différent.

14. Procédé comprenant :
la réception, sur un dispositif connecté via un moyen de communication à courte portée et en réponse à l'établissement d'une relation de confiance avec un dispositif mandataire, d'une clé de cryptage et d'un ensemble de protocoles à partir du dispositif mandataire, dans lequel la relation de confiance est établie par l'authentification du dispositif connecté par le dispositif mandataire durant un processus d'inscription ;
la détection, par le dispositif connecté, qu'une ou plusieurs conditions énoncées dans l'ensemble de protocoles ont été satisfaites ;
l'identification, par le dispositif connecté, d'une transaction associée à la ou aux conditions énoncées dans l'ensemble de protocoles ;
la génération, par le dispositif connecté, d'une demande de transaction sur base de la transaction identifiée;
le cryptage, par le dispositif connecté, de la demande de transaction à l'aide de la clé de cryptage reçue ; et
la transmission, via le moyen de communication à courte portée du dispositif connecté, de la demande de transaction au dispositif mandataire à compléter via un réseau, le dispositif connecté étant dépourvu d'une connexion directe au réseau.

15. Procédé selon la revendication 14, dans lequel la détection qu'une ou plusieurs conditions énoncées dans l'ensemble de protocoles ont été satisfaites comprend :
la réception d'une entrée à partir d'un ou plusieurs capteurs du dispositif connecté ; et
la détermination que l'entrée satisfait au ou aux seuils associés à la ou aux conditions.
